# EUROPEAN PATENT SPECIFICATION

(11) **EP 2 803 405 B1**
(45) Date of publication and mention of the grant of the patent: **21.08.2019**
(21) Application number: 14167467.1
(22) Date of filing: 08.05.2014
(51) Int. Cl.: B01D 67/00, B01D 39/16, B01D 69/12, C02F 1/44

(54) **Silver-coated nanofiber fabrics for pathogen removal filtration**
Silberbeschichtetes Nanofasergewebe für Filtration zur Entfernung von Krankheitserregern
Tissus à nanofibres argentées pour la filtration d'élimination d'agents pathogènes

(30) Priority: 17.05.2013 US 201313896638
(43) Date of publication of application: 19.11.2014
(73) Proprietor: Goodrich Corporation, Charlotte, NC 28217 (US)
(72) Inventor: Hu, Jim, Hudson Village, OH Ohio 44236 (US)
(74) Representative: Dehns

(56) References cited:
- EP-A1- 2 392 395
- WO-A1-2011/142726
- WO-A2-2010/028017
- WO-A2-2013/013241
- GB-A- 2 263 883
- US-A1- 2005 132 682
- US-A1- 2008 314 010
- US-A1- 2009 026 137

## Description

### BACKGROUND

In an aircraft, a potable water system is generally used to supply cabin outlet facilities (e.g., handwash basins in lavatories and sinks in onboard kitchens) with fresh water. Such a potable water system may use water filter media (e.g., pathogen-retaining filter media) combined with biocides-containing nanofiber fabrics to kill pathogens contained in the water or air (see US patent application US 2011/0297609 A1).

However, when the potable water system uses biocides-containing nanofiber fabrics bound via adhesive layers to the filter media for disinfestation, it has been found that the incorporation of the nanofiber fabrics and the adhesive layers, no matter how thin they are, usually causes a significant drop in the water flow rate and also in the water pressure. Thus, there is a need for the development of a new type of filtration system that can be used in a potable water system in the aviation field. It is desired that such a filtration system offers efficient disinfection effects while achieving a low pressure drop and a high flow rate when in use.

WO 2013/013241 discloses a nanofiber liquid filtration medium.

EP 2392395 discloses filters with directly laminated pathogen removal membranes and silver-coated nanofibre fabrics.

US 2009/0026137 discloses laminates of a microfiltration membrane and a nanofibre layer with an intermediate spunbond layer.

### SUMMARY

The invention provides a novel type of filter media that offers efficient disinfection effects, which also achieves a low water pressure drop and a high water flow rate when in use. Specifically, the filter media of the invention includes a microorganism-killing membrane that contains a thermal binding layer and electrospun nanofiber fabrics that are coated with a silver film, wherein the electrospun nanofiber fabrics are thermally bound to the thermal binding layer.

Thus, viewed from a first aspect, the invention provides a method of preparing a filter media according to claim 1.

Viewed from a second aspect, the invention provides filter media according to claim 5.

The filter media, by virtue of the spunbonded nonwoven fabric layers thermally binding the layers of the filter media together, does not contain an adhesive layer. The filter media of the invention is adhesive free (i.e., containing no adhesive layers or pastes).

In one embodiment, the electrospun nanofiber polymeric fabrics are thermoplastic fabrics, which can be polyurethane fabrics including high temperature polyurethane elastomeric fabrics, cellulose acetates fabrics, or polyamides fabrics, or a combination thereof.

In another embodiment, the thermal binding layer comprises spunbonded nonwoven polymeric fabrics, such as, polyester fabrics, polypropylene fabrics, polyurethane fabrics, polyimide fabrics, and polyurethane fabrics, or a combination thereof. In certain instances, the spunbonded nonwoven polymeric fabrics are polyester fabrics, such as, Reemay® spunbonded straight polyester nonwoven fabrics (e.g., Reemay® 2004 and Reemay® 2250).

In certain embodiments, pores of the resulting silver-coated nanofiber fabrics are essentially free of blockage by the deposited silver film.

In separate embodiments, the silver film can be deposited onto the nanofiber fabrics through a chemical vapor deposition, a physical vapor deposition, or a sol gel deposition, or a combination thereof. Exemplified chemical vapor deposition includes, but is not limited to, a vacuum vapor deposition, and a combustion chemical vapor deposition.

Another aspect of the invention provides a water-purification cartridge that contains the filter media of the invention.

The invention also features a portable water system containing the water-purification cartridge the invention.

When in use, the filter media according to the invention offers advantages, such as, maintaining a high water flow rate and a low water pressure drop. The filter media of the invention is also highly efficient in achieving good disinfection effects. Thus, the filter media of the invention can be used as an add-on component to dirt/chemical filter cartridge currently used in aircraft potable water systems to meet requirements of disinfection without slowing down water flow rate and increasing water pressure drop.

### BRIEF DESCRIPTION OF THE DRAWINGS

Certain preferred embodiments of the present invention will now be described in greater detail by way of example only and with reference to the accompanying drawings, in which:
FIG. 1 shows a process of producing a SN/SR film by depositing a thin silver coating onto a N/R film that contains nanofiber fabrics ("N") and Reemay® spundbonded nonwoven fabrics ("R");
FIG. 2 demonstrates a process of making a SN/SR/R/P film by thermally laminating a N/R film on pathogen-retaining media *via* a separate layer of Reemay® spundbonded nonwoven fabrics - the resulting assemble ("SN/SR/R/P") is capped from both sides with Reemay® spundbonded nonwoven fabrics for protection;
FIG. 3 demonstrates a process of making a D/R/SN/SR/R/P film by thermally laminating a SN/SR/R/P film onto dirt/chemical-holding filter media *via* a separate Reemay® 2250 layer - the resulting assemble ("D/R/SN/SR/R/P") is then capped with additional Reemay® 2250 layers for protection;
FIG. 4 shows a process of producing a SN/SR/R/SR/SN film by thermally binding two SN/SR films together *via* another Reemay® 2250 layer; and the resulting assemble ("SN/SR/R/SR/SN") is capped with additional Reemay® 2250 layers for protection;
FIG. 5 shows a process of producing a SN/R/P film by depositing a thin silver coating only onto nanofiber fabric side to obtain a SN/R film, followed by thermally laminating the SN/R films *via* the R layer (i.e., Reemay® 2250 layer) onto pathogen-retaining media - the resulting assemble ("SN/R/P") is capped with separate Reemay® 2250 layers for protection;
FIG. 6 shows a process of producing a D/R/SN/R/P film by thermally laminating a SN/R film *via* the R layer (i.e., the Reemay® 2250 layer) onto pathogen-retaining media, and thermally laminating the SN/R film *via* another Reemay® 2250 layer onto dirt/chemical holding filter media - and the resulting assemble ("D/R/SN/R/P") is then capped with additional Reemay® 2250 layers for protection;
FIG. 7 shows a process of producing a SN/R/SN film by thermally laminating two SN/R films together *via* one of the R layers (i.e., the incorporated Reemay® 2250 layers) - and the resulting assemble ("SN/R/SN") is capped with another Reemay® 2250 layer for protection;
FIG. 8 shows a structure having multiple-turn rolls of biocidal fabrics incorporated inward of a dirt/chemical retaining filter cartridge; and
FIG. 9 shows a structure having multiple-turn rolls of biocidal fabrics incorporated outward of a dirt/chemical retaining filter cartridge.

### DETAILED DESCRIPTION

Electrospun nanofiber fabrics containing biocide(s) can be bound to pathogen-retaining water filter media (such as, NanoCeram-PAC™) media to kill pathogens it contacts (see US 2011/0297609). However, there is a challenge to bind nanofiber fabrics to filter media without using adhesive pastes or layers. However, when used, adhesive pastes or layers can block nanofiber pores and biocidal sites, or bring in chemical contaminants from the adhesives into water systems.

The invention provides a novel method of preparing a filter media, comprising a step of thermally binding silver-coated nanofiber fabrics to at least one membrane selected from the group of a dirt-retaining membrane, a chemical-retaining membrane, and a pathogen-retaining membrane, or a combination thereof, wherein said silver-coated nanofiber fabrics are prepared through depositing a silver film onto nanofiber fabrics (e.g., electronspun nanofiber fabrics).

In certain embodiments, pores of the resulting silver-coated nanofiber fabrics are essentially free of blockage by the deposited silver film.

In separate embodiments, the silver film can be deposited onto the nanofiber fabrics through a chemical vapor deposition, a physical vapor deposition, or a sol gel deposition, or a combination thereof.

Chemical vapor deposition includes methods, such as, traditional vacuum vapor deposition (CVD) and combustion chemical vapor deposition (CCVD) by nGima company (www.nGimat.com). Physical vapor deposition (PVD) is performed, for example, by magnetron sputtering or electron beam.

In certain embodiments, the chemical vapor deposition used herein is a vacuum vapor deposition or a combustion chemical vapor deposition.

It is contemplated that other biocidal materials can be deposited onto the nanofiber fabrics. The resulting biocidal-coated nanofiber fabrics can replace the silver-coated nanofiber fabrics used herein. The biocidal deposition can be achieved, for example, by a chemical vapor deposition, a physical vapor deposition, or a sol gel deposition, or a combination thereof.

Thickness of the silver coating can be in a nano-range. By coating the nanofibers with a silver film, the use of biocidal nano-particle can be avoided. Accordingly, the invention provides a nano-particles leach-free method.

The utility of the silver coated fabrics as above delineated avoids the use of nanoparticles or biocidal additive chemicals, which require a subsequent leach of nanoparticles or biocidal additive chemicals. Generally, the silver coatings used herein are not soluble. Thus, the possibility of having leach issues in the process is low.

Further, the large surface offered by nanofiber fabrics provides a huge silver coating area. Accordingly, the biocidal fabrics used herein offer significantly enhanced biocidal effects. Further, the combination of silver-coated nanofiber fabrics and pathogen retaining or dirt/chemical retaining filter media offers various functions including, but not limited to, pathogen control, chemical control, and dirt control while maintaining a low pressure drop and a high water flow rate when in use.

The invention also provides a method of preparing a filter media, comprising a step of thermally binding silver-coated nanofiber fabrics to at least one membrane, such as, a dirt-retaining membrane and, a chemical-retaining membrane, in addition to the pathogen-retaining membrane, or a combination thereof. The silver-coated nanofiber fabrics used herein are prepared through depositing a silver film onto nanofiber fabrics.

The nanofiber fabrics that can be coated by the method of the invention include, for example, electronspun nanofiber fabrics.

Further, the invention, in at least a preferred embodiment, relates to the use of electrospun nanofiber fabrics that are coated with a silver film (or other biocidal material), which are either directly thermally bound to pathogen-retaining filter media or via a thermal binding layer onto pathogen-retaining filter media, for providing filter media with enhanced pathogen killing efficacy. Alternatively, the invention provides filter media comprising multiple turns of silver-coated electrospun nanofiber fabrics (or together with a silver-coated thermal binding layer) for providing pathogen killing efficacy. In certain embodiments, the electrospun nanofiber fabrics are very thin fabrics.

Accordingly, a preferred embodiment of the invention provides filter media comprising a microorganism-killing membrane. The microorganism-killing membrane includes a thermal binding layer (also referred to as a thermal binder) and electrospun nanofiber fabrics coated with a silver film. According to the invention, the filter media does not contain an adhesive layer or adhesive pastes. In certain embodiments, the thermal binding layer is also coated with a silver film. In other embodiments, the thermal binding layer is not coated with a silver film.

According to preferred embodiments of the invention, the electrospun nanofiber fabrics can be thermoplastic fabrics, including, such as, polyurethane fabrics, cellulose acetates fabrics, high temperature polyurethane elastomeric fabrics, and polyamides fabrics, or a combination thereof. In one embodiment, the electrospun nanofiber fabrics are high temperature polyurethane elastomeric fabrics.

The thermal binding layer of preferred embodiments of the invention can be made of spunbonded nonwoven polymeric fabrics. Various spunbonded nonwoven polymeric fabrics can be used, including, such as, polyester fabrics, polypropylene fabrics, polyurethane fabrics, polyimide fabrics, and polyurethane fabrics, or a combination thereof. Other polymers or combinations thereof that have high Fraizer permeability or high Textest permeability can also be used.

For example, the spunbonded nonwoven polymeric fabrics for use in the thermal binding layer are polyester fabrics. Exemplified spunbonded nonwoven polymeric fabrics that can be used in the invention include, for example, Reemay® spunbonded polyester fabrics.

Reemay® spunbonded polyester is a sheet structure of continuous filament polyester fibers that are randomly arranged, highly dispersed, and bonded at the filament junctions. The chemical and thermal properties of Reemay® are essentially those of polyester fiber. The fibers' spunbonded structure offers a combination of physical properties, such as, high tensile and tear strength, non-raveling edges, excellent dimensional stability, no media migration, good chemical resistance, and controlled arrestance and permeability. Reemay® fabrics are used in various industries as covers (e.g., garden blankets) or support materials.

Reemay® spunbonded polyester fabrics include either straight or crimped polyester fibers which give the fabrics different filtration and other general performance properties. It is believed that crimped fibers offer properties of softness, conformability, and greater porosity, while straight fibers yield stiffness, tighter structure, and finer arrestance.

In certain embodiments of the invention, the Reemay® spunbonded polyester fabrics used herein are straight polyester fabrics. Exemplified Reemay® spunbonded polyester fabrics include, such as, Reemay® spunbonded polyester nonwovens 2004 (or "Reemay® 2004"), and Reemay® spunbonded polyester nonwovens 2250 (or "Reemay® 2250"). These Reemay® fabrics are filtration grade spunbonded polyester fabrics: for Reemay® 2004, thickness 5.0 mil, Frazer 1400 cfm/ft²; for Reemay® 2250, thickness 5.0 mil, Friazer 1080 cfm/ft².

The filter media of the invention includes pathogen-retaining medium. The microorganism-killing membrane is thermally bound to the pathogen-retaining medium via the same thermal binding layer or via another thermal binding layer.

In embodiments of the invention, the filter media includes dirt/chemical holding filter media, and optionally one or more additional thermal binding layers. The microorganism-killing membrane, via the thermal binding layers, is thermally bound to both the pathogen-retaining medium and the dirt or chemical holding filter media via different surfaces.

Preferred embodiments of the invention also envision the use of filter media containing at least two of the above-discussed microorganism-killing membranes. If the thermal binding layer in each of the microorganism-killing membranes is coated with a silver film, the microorganism-killing membranes are bound to each other through an additional thermal binding layer. Alternatively, the microorganism-killing membranes can be bound to each other through the thermal binding layers contained therein.

As known in the art, adhesives block some pores of media and biocide sites, further causing reduced flow rate and high pressure drops in a filtration system. By using thin Reemay® fabrics as binders in the filter media, the use of chemical adhesives can be eliminated. Further, biocidal nanofiber fabrics can form multiple-layered filter media or be coupled with other filter media membranes, such as, NanoCeram-PAC™, to achieve a high flow rate and low pressure drop when in use. The use of Reemay® fabrics also makes it possible to fabricate the fabrics contained in the filter media.

According to preferred embodiments of the invention, a microorganism-killing membrane that contains silver-coated fabrics (such as, SN/SR) can be rolled up by multiple turns on a screen roll, which is then placed inward of a dirt/chemical holding filter media (or cartridge). Alternatively, the microorganism-killing membrane can be rolled up and placed outside of the dirt/chemical holding filter media (or cartridge). The specific design of the roll-up forms depends upon the water-flow direction in a specific portable water system.

Further, rolled-up silver-coated fabrics may contain multiple microorganism-killing membranes of the invention. The rolled-up biocide-loaded fabrics can be placed inward of a dirt/chemical holding filter media (or cartridge), or outside of the dirt/chemical holding filter media (or cartridge), depending on the water-flow direction.

Preferred embodiments of the invention further feature a water-purification cartridge containing the filter media.

Also provided is a portable water system containing the water-purification cartridge. Generally, a portable water system includes components, such as, a water storage tank, a pump, a supply line, a water-purification device (such as, a water-purification cartridge). For a detailed description on portable water systems and functions thereof, please refer to US 2011/0297609.

A variety of configurations according to preferred embodiments of the invention are presented in the drawings, where nanofiber fabrics are pre-loaded with biocide(s). In these drawings, Reemay® 2250 is provided as an example of spunbonded nonwoven polymeric fabrics that are used for a thermal binding layer (a thermal binder). The invention covers the use of other types of spunbonded nonwoven polymeric fabrics as a thermal binding layer and the use of other types of biocides.

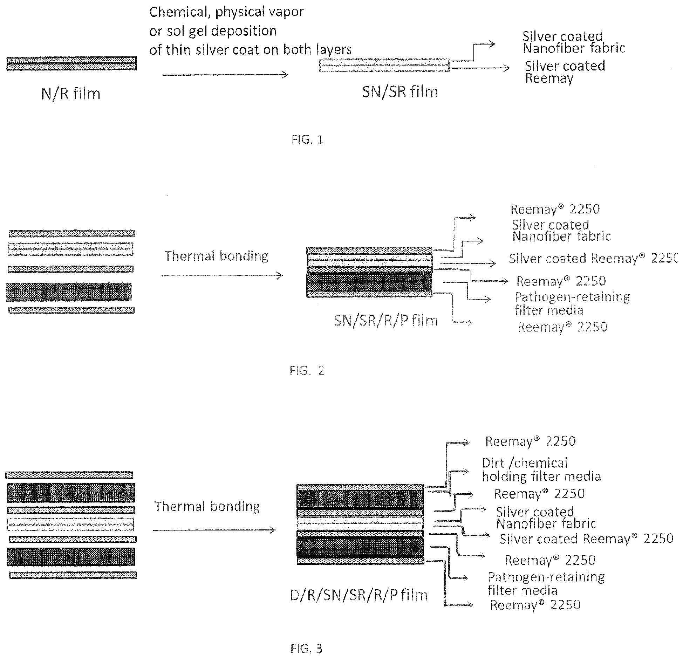

FIG. 1 shows that a N/R film is coated with a thin silver film from both sides *via* combustion chemical vapor deposition (CCVP). The silver coats the N/R film properly without blocking the pores of fiber fabrics. The resulting silver-coated N/R film is designated as a SN/SR film.

In a CCVD process, silver precursor compounds are added to a burning gas. Flame is moved closely above the surface to be coated. The high energy within the flame converts the precursor compounds into silver particles, which readily interact with the fabric, forming a firmly adhering silver deposit. The resulting micro-/nano-structure and thickness of the deposited silver layer can be controlled by varying process parameters, such as, speed of substrate or flame, number of passes, substrate temperature, and distance between flame and substrate.

The N/R film can be obtained by electrospinning nanofiber fabrics onto Reemay® spundbonded nonwoven fabrics.

As known in the art, electrospinning generally uses an electrical charge to draw very fine (typically on the micro or nano scale) fibers from a liquid. Electrospinning shares characteristics of both electrospraying and conventional solution dry spinning of fibers (A. Ziabicki, Fundamentals of fiber formation, John Wiley and Sons, London, 1976, ISBN 0-471-98220-2).

The process is non-invasive and does not require the use of coagulation chemistry or high temperatures to produce solid threads from solution. Further, electrospinning from molten precursors has also been practiced in this art, which ensures that no solvent can be carried over into the final product.

A system for performing electrospinning generally includes a spinneret that is connected to a high-voltage direct current power supply, a syringe pump, and a grounded collector. Design of an applicable electrospinning process depends upon many factors, including, such as, molecular weight, molecular-weight distribution and architecture (e.g., branched, linear etc.) of the fibers, solution properties (e.g., viscosity, conductivity, and surface tension), electric potential, flow rate and concentration, distance between the capillary and collection screen, ambient parameters (e.g., temperature, humidity and air velocity in the chamber), and motion of target screen (collector) (see, e.g., http://en.wikipedia.org/wiki/Electrospinning).

Son et al. (Macromol. Rapid Commun. 2004, 25, 1632-1637) provides an electrospinning method for preparing of antimicrobial fine fibers with silver nanoparticles. The fine fibers with silver nanoparticles were prepared by direct electrospinning of a cellulose acetate solution containing silver nitrate, followed by photoreduction.

FIG. 2 shows that a SN/SR film is thermally bound onto pathogen- retaining media (such as, NanoCeram® or NanoCeram-PAC™ media) via an additional Reemay® layer. The resulting assemble is designated as a SN/SR/R/P film. The SN/SR layers can readily kill pathogens retained on the pathogen retaining media to prevent biofouling.

As used herein, biofouling (or "biological fouling") means accumulation of microorganisms on surfaces or pores of the filter media.

FIG. 3 shows that a SN/SR/R/P assemble is thermally laminated with dirt/chemical-holding filter media *via* Reemay® fabrics. The dirt/chemical filter can be NanoCeram-PAC™ media or other carbon filters. The resulting assemble is designated as a D/R/SN/SR/R/P film. Use of the dirt/chemical-holding filter prevents SN/SR/R/P layers from prematurely losing disinfection properties due to surface blockage by dirt and/or chemicals.

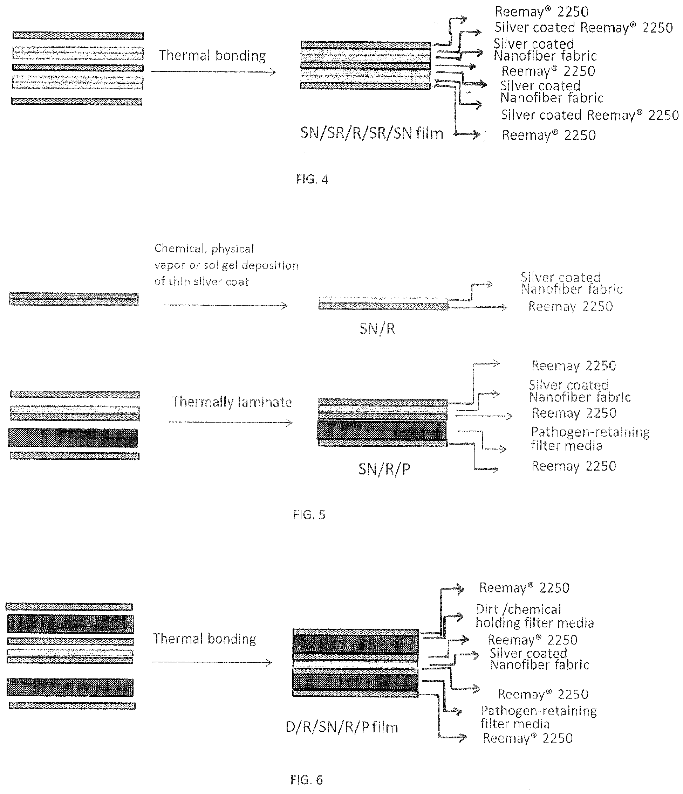

FIG. 4 to FIG. 7 show examples of filter media that are outside the present claims but may feature in a divisional.

FIG. 4 shows that two SN/SR films are thermally laminated together *via* Reemay® fabrics. The resulting assemble is designated as a SN/SR/R/SR/SN film. More than two SN/SR films can be thermally laminated if a better disinfection and filtration performance is needed.

FIG. 5 Unlike the process shown in FIG. 1, only the nanofiber fabric side in the N/R film is coated with silver. This is achieved by masking the Reemay® side followed by depositing silver from the nanofiber side. The resulting SN/R film can replace the SN/SR/R film as shown in FIG. 2. Further, the SN/R film can also replace SN/SR/R films shown in the FIGS. 3 and 4.

FIG. 6 shows a process of producing a D/R/SN/R/P film by thermally laminating a SN/R film to pathogen-retaining media *via* a Reemay® 2250 layer (e.g., the R layer in the SN/R film), and also thermally laminating the SN/R film *via* another Reemay® 2250 layer to dirt/chemical holding filter media. Further, each side of the resulting assemble ("D/R/SN/R/P") is capped with two Reemay® 2250 layers for protection.

The two thermal lamination steps can be performed concurrently or sequentially. In one example, the SN/R film is laminated at the same time *via* Reemay® 2250 layers onto pathogen-retaining media and onto dirt/chemical holding filter media from different sides. In another, the SN/R film is first laminated *via* a Reemay® 2250 layer onto pathogen-retaining media, and then onto dirt/chemical holding filter media *via* another Reemay® 2250 layer. Alternatively, the SN/R film is laminated *via* a Reemay® 2250 layer onto dirt/chemical holding filter media prior to its lamination to pathogen-retaining media *via* another Reemay® 2250 layer.

As well understood by an ordinarily skilled artisan, the Reemay® 2250 layer used for laminating a biocidal film can be the Reemay® ("R") layer (if included in the biocidal film) or a separate Reemay® layer.

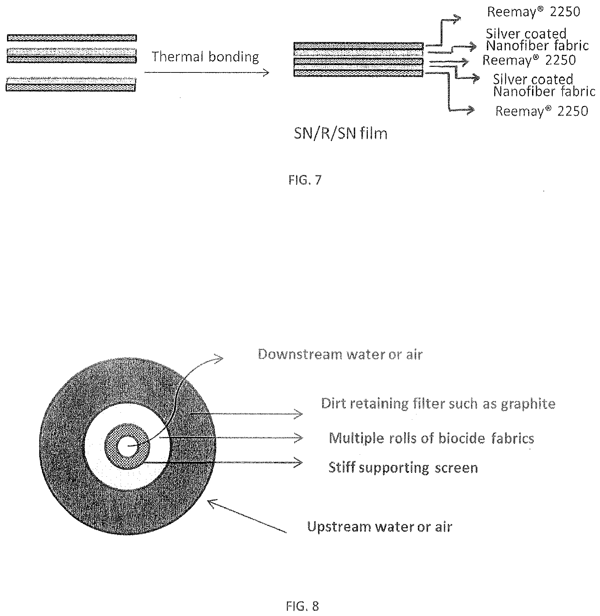

FIG. 7 shows a process of producing a SN/R/SN film by thermally laminating two SN/R films together *via* one of the Reemay® 2250 layers included in the SN/R films. Further, the resulting assemble is capped with a separate Reemay® 2250 layer for protection.

FIG. 8 shows that biocidal fabrics are rolled on a stiff screen roll multiple turns for providing an enhanced pathogen killing efficiency. The biocidal fabrics that can be used herein include, but are not limited to, a SN/SR film, a SN/R film, a SN/SR/R/SN/SR assemble (shown in FIG. 4), and a SN/R/SN assemble (shown in FIG. 7).

In certain instances, the biocidal fabrics are composed of very thin nanofiber fabrics and/or thin Reemay® fabrics, so that the total thickness of multiple layers of the biocidal fabrics is still thin. The use of such a rolled-up structure does not cause a reduced water flow rate or a significant drop in water pressure. In this drawing, the water flow direction is outward from the center of the filter media ring.

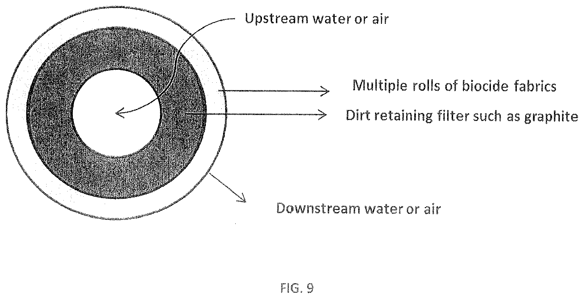

FIG. 9 is similar to FIG. 8. In this case, the biocidal fabrics are rolled on the dirt and chemical retaining filter ring. The water flow direct direction is inward toward center. Likewise, the biocidal fabrics used herein include, for example, a SN/SR film, a SN/R film, a SN/SR/R/SN/SR assemble (shown in FIG. 4), and a SN/R/SN assemble (shown in FIG. 7).

Further, the Reemay® 2250 fabrics can be thermally bound to a membrane or other Reemay® fabrics at a relative low temperature, e.g., 100 - 130 °C with an appropriate pressure. It is appreciated that at such a low temperature, most fabrics or media will not be thermally damaged.

Also disclosed is a method of coating nanofiber fabrics with a thin biocidal coating. The method includes a step of depositing a biocidal material (e.g., a silver film) onto the nanofiber fabrics, resulting in silver-coated nanofiber fabrics with pores essentially free of blockage of the deposited silver film.

As above discussed, the use of silver-coated nanofibers fabrics avoids use of nano-silver particles. It eliminates concerns of silver particle leaching and increase disinfection efficiency due to larger silver surfaces.

The invention further relates to the use of silver-coated nanofiber fabrics, which are bound to a thermal binding layer to provide pathogen killing efficacy. By using thin nanofiber fabrics, a high water flow rate and low water pressure drop can be achieved.

Although the application focuses on a water filtration system, it is believed that the filter media of the invention works equally well for an air filtration system or other types of liquid filtration systems.

Accordingly, the invention provides more efficient disinfection filter media for air or liquid filtration, which offers desired properties, such as, a low pressure drop and a high flow rate when in use. Specifically, thin electrospun nonwoven polymeric nanofiber fabrics of the invention are coated with a biocidal material, which is then either directly thermally bound onto pathogen-retaining filter media or via a thermal binder onto pathogen-retaining filter media, provide an enhanced pathogen killing efficacy. Alternatively, filter media containing multiple-rolls of biocidal fabrics also provides good pathogen killing properties.

Still further, the invention relates to a method of preparing filter media for use in a potable water system or an air filtration system. The method comprises thermally binding silver-coated nanofiber fabrics with a thermal binding layer, optionally further with pathogen-retaining media. The thermal binding step can be conducted through a process including, such as, hot calendaring, belt calendaring, through-air thermal bonding, ultrasonic bonding, radiant-heat bonding, hot laminators, vacuum bagging with heat, and autoclave with pressure and heat, or a combination thereof. Specifically, the thermal binding step of the invention is preferably designed to avoid or minimize melting fibers contained in the nanofiber fabrics and/or the thermal binding layer.

For example, the autoclave method can be performed by a process comprising the following steps: 1). Lay up fabrics and membranes; 2). Bag the fabrics and membranes on a support flat metal; 3). Vacuum the bag; 4). Place the assemble in an autoclave; 5). Apply pressure and heat for a period time; 6). Cool the assemble down to an ambient temperature and release vacuum; and 7). Check to ensure that thermal bonding is completed.

## Claims

1. A method of preparing a filter media, comprising the steps of:
making a fabric assembly by:
depositing a silver coating onto a film comprised of a layer of nanofiber fabric and a first spunbonded nonwoven fabric to produce a SN/SR film with a silver-coated nanofiber fabric layer (SN) and a silver-coated first spunbonded nonwoven polymeric fabric layer (SR),
thermally laminating the SN/SR film, via a second layer of spunbonded nonwoven polymeric fabric (R), onto a pathogen-retaining membrane (P) to produce a SN/SR/R/P film of silver-coated nanofiber fabric/silver-coated first spunbonded nonwoven polymeric fabric/second spunbonded nonwoven polymeric fabric layer/pathogen-retaining membrane, and
capping the SN/SR/R/P film from both sides with spunbonded nonwoven polymeric fabrics.

2. The method of claim 1, wherein the silver coating is deposited through a chemical vapor deposition, a physical vapor deposition, or a sol gel deposition, or a combination thereof.

3. The method of claim 2, wherein said chemical vapor deposition is a vacuum vapor deposition or a combustion chemical vapor deposition.

4. The method of claim 1, 2, or 3, wherein the nanofiber fabrics are electrospun nanofiber fabrics.

5. Filter media comprising a silver-coated nanofiber fabric/silver-coated first spunbonded nonwoven polymeric fabric SN/SR film,
wherein the SN/SR film has been thermally laminated, via a second layer of spunbonded polymeric nonwoven fabric (R), onto a pathogen-retaining membrane (P), to produce a SN/SR/R/P film of silver-coated nanofiber fabric/silver-coated first spunbonded nonwoven fabric/second spunbonded nonwoven fabric layer/pathogen-retaining membrane,
wherein the SN/SR/R/P film has been capped on both sides with spunbonded nonwoven polymeric fabrics, and wherein said filter media does not contain an adhesive layer.

6. The filter media of claim 5, wherein the electrospun nanofiber fabrics are electrospun nanofiber thermoplastic fabrics.

7. The filter media of claim 6, wherein the thermoplastic fabrics are selected from the group of polyurethane fabrics, high temperature polyurethane elastomeric fabrics, cellulose acetates fabrics, and polyamides fabrics, or a combination thereof.

8. The filter media of claim 5, 6 or 7, wherein the spunbonded nonwoven polymeric fabrics are selected from the group of polyester fabrics, polypropylene fabrics, polyurethane fabrics, polyimide fabrics, and polyurethane fabrics, or a combination thereof.

9. The filter media of any of claims 5 to 8, wherein the filter media is in a multiple-turn rolled-up form.

10. The rolled-up filter media of claim 9 wherein said filter media further comprises dirt or chemical holding filter media.

11. The filter media of claim 9 or 10, wherein the rolled-up filter media is placed inward of the dirt or chemical holding filter media or wherein the rolled-up filter media membrane is outside of the dirt or chemical holding filter media.

12. A water-purification cartridge comprising the filter media of any of claims 5 to 11.

## Patentansprüche

1. Verfahren zum Herstellen eines Filtermediums, die folgenden Schritte umfassend:
Herstellen einer Gewebeanordnung durch:
Abscheiden einer Silberbeschichtung auf einen Film, bestehend aus einer Schicht von Nanofasergewebe und einem ersten spinngebundenen nicht gewebten Gewebe, um einen SN/SR-Film mit einer Schicht von silberbeschichtetem Nanofasergewebe (SN) und einer Schicht von silberbeschichtetem ersten spinngebundenen nicht gewebten Polymergewebe (SR) herzustellen,
thermisches Laminieren des SN/SR-Films über eine zweite Schicht von spinngebundenem nicht gewebten Polymergewebe (R) auf eine den Krankheitserreger enthaltende Membran (P), um einen SN/SR/R/P-Film von einer Schicht von silberbeschichtetem Nanofasergewebe/silberbeschichtetem ersten spinngebundenen nicht gewebten Polymergewebe/zweitem spinngebundenen nicht gewebten Polymergewebe/den Krankheitserreger enthaltenden Membran herzustellen, und
Begrenzen des SN/SR/R/P-Films von beiden Seiten mit spinngebundenen nicht gewebten Polymergeweben.

2. Verfahren nach Anspruch 1, wobei die Silberbeschichtung durch eine chemische Dampfabscheidung, eine physikalische Dampfabscheidung oder eine Sol-Gel-Abscheidung oder eine Kombination davon abgeschieden wird.

3. Verfahren nach Anspruch 2, wobei die chemische Dampfabscheidung eine Vakuumdampfabscheidung oder eine chemische Dampfabscheidung durch eine Verbrennung ist.

4. Verfahren nach Anspruch 1, 2 oder 3, wobei die Nanofasergewebe elektrogesponnene Nanofasergewebe sind.

5. Filtermedium, umfassend einen SN/SR-Film aus silberbeschichtetem Nanofasergewebe/silberbeschichtetem ersten spinngebundenen nicht gewebten Polymergewebe,
wobei der SN/SR-Film über eine zweite Schicht aus spinngebundenem nicht gewebtem Polymergewebe (R) auf eine den Krankheitserreger enthaltende Membran (P) thermisch laminiert wurde, um einen SN/SR/R/P-Film aus einer Schicht von silberbeschichtetem Nanofasergewebe/silberbeschichtetem ersten spinngebundenen nicht gewebten Gewebe/zweitem spinngebundenen nicht gewebten Gewebe/den Krankheitserregern enthaltenden Membran herzustellen,
wobei der SN/SR/R/P-Film auf beiden Seiten mit spinngebundenen nicht gewebten Polymergeweben begrenzt wurde und wobei das Filtermedium keine Klebeschicht enthält.

6. Filtermedium nach Anspruch 5, wobei die elektrogesponnenen Nanofasergewebe thermoplastische elektrogesponnene Nanofasergewebe sind.

7. Filtermedium nach Anspruch 6, wobei die thermoplastischen Gewebe ausgewählt sind aus der Gruppe aus Polyurethangeweben, hochtemperaturbeständigen elastomeren Polyurethangeweben, Celluloseacetatgeweben und Polyamidgeweben oder einer Kombination davon.

8. Filtermedium nach Anspruch 5, 6 oder 7, wobei die spinngebundenen nicht gewebten Polymergewebe ausgewählt sind aus der Gruppe aus Polyestergeweben, Polypropylengeweben, Polyurethangeweben, Polyimidgeweben und Polyurethangeweben oder einer Kombination davon.

9. Filtermedium nach einem der Ansprüche 5 bis 8, wobei das Filtermedium in einer mehrfach gewundenen aufgerollten Form vorliegt.

10. Aufgerolltes Filtermedium nach Anspruch 9, wobei das Filtermedium ferner ein Schmutz- oder Chemikalien-aufnehmendes Filtermedium umfasst.

11. Filtermedium nach Anspruch 9 oder 10, wobei das aufgerollte Filtermedium innerhalb des Schmutz- oder Chemikalien-aufnehmenden Filtermediums positioniert ist oder wobei sich die Membran des aufgerollten Filtermediums außerhalb des Schmutz- oder Chemikalien-aufnehmenden Filtermediums befindet.

12. Wasserreinigungskartusche, umfassend das Filtermedium nach einem der Ansprüche 5 bis 11.

## Revendications

1. Procédé de préparation d'un milieu filtrant, comprenant les étapes suivantes :
fabrication d'un ensemble tissu par :
dépôt d'un revêtement d'argent sur un film composé d'une couche de tissu à nanofibres et d'un premier tissu non tissé filé-lié pour produire un film SN/SR avec une couche de tissu à nanofibres revêtu d'argent (SN) et une première couche de tissu polymère non tissé filé-lié revêtu d'argent (SR),
la stratification thermique du film SN/SR, via une seconde couche de tissu polymère non tissé filé-lié (R), sur une membrane de retenue d'agents pathogènes (P) pour produire un film SN/SR/R/P de tissu à nanofibres revêtu d'argent/premier tissu polymère non tissé filé-lié revêtu d'argent/seconde couche de tissu polymère non tissé filé-lié/membrane de retenue d'agents pathogènes, et
recouvrement du film SN/SR/R/P des deux côtés avec des tissus polymères non tissés filés-liés.

2. Procédé selon la revendication 1, dans lequel le revêtement d'argent est déposé par un dépôt chimique en phase vapeur, un dépôt physique en phase vapeur, ou un dépôt sol gel, ou une combinaison de ceux-ci.

3. Procédé selon la revendication 2, dans lequel le dépôt chimique en phase vapeur est un dépôt sous vide en phase vapeur ou un dépôt chimique en phase vapeur par combustion.

4. Procédé selon la revendication 1, 2 ou 3, dans lequel les tissus à nanofibres sont des tissus à nanofibres électro-filés.

5. Milieu filtrant comprenant un film SN/SR de tissu à nanofibres revêtu d'argent/premier tissu polymère non tissé filé-lié revêtu d'argent,
dans lequel le film SN/SR a été thermiquement stratifié, via une seconde couche de tissu non tissé polymère filé-lié (R), sur une membrane de retenue d'agents pathogènes (P), pour produire un film SN/SR/R/P de tissu à nanofibres revêtu d'argent/premier tissu non tissé filé-lié revêtu d'argent/seconde couche de tissu non tissé filé-lié/membrane de retenue d'agents pathogènes, dans lequel le film SN/SR/R/P a été recouvert sur les deux côtés de tissu polymères non tissés filés-liés, et dans lequel ledit milieu filtrant ne contient pas de couche adhésive.

6. Milieu filtrant selon la revendication 5, dans lequel les tissus à nanofibres électrofilés sont des tissus thermoplastiques à nanofibres électrofilés.

7. Milieu filtrant selon la revendication 6, dans lequel les tissus thermoplastiques sont sélectionnés dans le groupe constitué par les tissus polyuréthane, les tissus élastomères de polyuréthane haute température, les tissus en acétates de cellulose, et les tissus en polyamides, ou une combinaison de ceux-ci.

8. Milieu filtrant selon la revendication 5, 6 ou 7, dans lequel les tissus polymères non tissés filés-liés sont sélectionnés dans le groupe de tissus en polyester, de tissus en polypropylène, de tissus en polyuréthane, de tissus en polyimide, et de tissus en polyuréthane, ou d'une combinaison de ceux-ci.

9. Milieu filtrant selon l'une quelconque des revendications 5 à 8, dans lequel le milieu filtrant est sous une forme enroulée à multiples tours.

10. Milieu filtrant enroulé selon la revendication 9, dans lequel ledit milieu filtrant comprend en outre un milieu filtrant retenant les saletés ou les produits chimiques.

11. Milieu filtrant enroulé selon la revendication 9 ou 10, dans lequel le milieu filtrant enroulé est placé vers l'intérieur du milieu filtrant retenant les saletés ou les produits chimiques ou dans lequel la membrane de milieu filtrant enroulée est à l'extérieur du milieu filtrant retenant les saletés ou les produits chimiques.

12. Cartouche de purification d'eau comprenant le milieu filtrant selon l'une quelconque des revendications 5 à 11.
